# EUROPÄISCHE PATENTANMELDUNG

(11) **EP 2 181 831 A1**
(43) Veröffentlichungstag der Anmeldung: **05.05.2010**
(21) Anmeldenummer: 09013559.1
(22) Anmeldetag: 28.10.2009
(51) Int. Cl.: B29C 45/27

(54) **Vorrichtung zur Verarbeitung von Elastomeren und/oder Thermoplasten**

(30) Priorität: 29.10.2008 DE 102008053712
(71) Anmelder: Klöckner Desma Elastomertechnik GmbH, 78567 Fridingen (DE)
(72) Erfinder: Dufner, Manfred, 72505 Krauchenwies (DE)
(74) Vertreter: Röther, Peter

(57) **Zusammenfassung**

Die Erfindung betrifft eine Vorrichtung zur Verarbeitung von Elastomeren und/oder Thermoplasten mit einem Verteilungssystem (1), das zur Verteilung des in einem Plastifizieraggregat plastifizierten Materials zwischen dem Plastifizieraggregat und einem Spritzgießwerkzeug angeordnet ist, wobei am Verteilungssystem (1) mindestens eine Düse (7) angeordnet ist, über die das plastifizierte Elastomer bzw. der plastifizierte Thermoplast in die Kavität des Spritzgießwerkzeugs einspritzbar ist, die dadurch gekennzeichnet ist,
dass die mindestens eine Düse (7) außermittig auf jeweils einem drehbaren Einsatz (8) in einer Aussparung (9) im Verteilungssystem (1) angeordnet ist.

## Beschreibung

Die Erfindung betrifft eine Vorrichtung zur Verarbeitung von Elastomeren und/oder Thermoplasten gemäß dem Oberbegriff des Patentanspruchs 1. Insbesonders ein so genannter Kaltkanalblock ist ein Verteilungssystem, das von einem Plastifizieraggregat beliefert wird und über ein Kanalsystem eine oder mehrere der in Rede stehenden Düsen beaufschlagt, die dann die noch plastische Masse in entsprechende Formkavitäten einspritzen. Damit die plastifzierte Masse auf ihrem Weg vom Plastifizieraggregat durch das Kanalsystem zu den Düsen verarbeitbar bleibt, ist der Kaltkanalblock mit einem entsprechenden Temperiersystem versehen, in dem ein geeignetes Temperiermedium zirkuliert.

Bislang sind diese Kaltkanalblöcke so ausgeführt, dass die Kaltkanaldüsen auf einer festen Position befestigt sind. Somit ist jeder Kaltkanalblock mit seiner Düsenanordnung auch nur für spezifische Formwerkzeuge verwendbar. Dies gilt auch für Thermoplastheißverteiler.

Um hier flexibler zu sein, schlägt die Erfindung gemäß dem kennzeichnenden Teil des Patentanspruchs 1 vor, dass die mindestens eine Düse außermittig jeweils auf einem drehbaren Einsatz befestigt ist, der in einer Aussparung im Verteilungssystem vorgesehen ist.

Durch Verdrehen des Einsatzes sind verschiedene Positionen der Düse möglich und somit die Betreibung verschiedene Werkzeuge unter dem gleichen Verteilungssystem.

Der verdrehbare Einsatz ist im einfachsten Fall eine runde Scheibe, auf dem exzentrisch die Düse angeordnet ist, wobei der Einsatz mittels eines Verschwenkantriebs über ein entsprechendes Getriebe um einen bestimmten Winkel verdrehbar ist.

Je nach dem erforderlichen Spritzgießwerkzeug und dessen Geometrie schlägt der Anspruch 3 vor, dass mehr als ein drehbarer Einsatz mit der ihm zugeordneten Düse im Verteilungssystem vorgesehen ist.

Somit existiert ein mehrwegiges Einspritzsystem.

Dabei ist gemäß einer vorteilhaften Ausführungsform nach Anspruch 4 vorgesehen, dass alle Düsen mittels des Verschwenkantriebs über das Getriebe synchron aufeinander zu bzw. voneinander weg verschwenkbar sind. D.h., dass von einer Extremstellung, in der die Düsen mit einem minimalen Abstand zueinander angeordnet sind bis zu einer anderen extremen Stellung, in der Abstand der Düsen maximal ist, auch Zwischenstellungen gewählt werden können.

Es ist auch möglich, dass jede Düse in eine zu den anderen verschiedene Stellung verschwenkbar ist.

Gemäß einer weiteren vorteilhaften Ausführungsform der Erfindung ist vorgesehen, dass die Düse bzw. die Düsen auf ihrem Einsatz in einem kreisbogenförmigen Ausschnitt, der auch komplett rund sein kann, verschwenkbar ist bzw. sind.

Wenn diese kreisbogenförmigen Ausschnitte wie in Anspruch 6 vorgesehen, in symmetrische Anordnung auf dem Verteilungssystem vorgesehen sind und jeweils einen 180° bis 360°-Bogen bilden, wobei hier vier Düsen vorgesehen sind, kann ein relativ großer Bereich durch die vier Düsen abgedeckt werden. Allerdings ist die Erfindung nicht auf maximal vier Düsen beschränkt.

Als Verteilungssystem kann gemäß Anspruch 7 ein Thermoplastheißverteiler vorgesehen sein.

Gemäß Anspruch 8 ist als Verteilungssystem ein Kaltkanalblock vorgesehen.

Die Erfindung wird im folgenden anhand von Zeichnungen dargestellt, und zwar am Beispiel eines Kaltkanalblocks.

Es zeigen:
- Fig. 1: einen Kaltkanalblock ausschnittsweise im Querschnitt
- Fig. 2: perspektivische Darstellung einer vorteilhaften Ausführungsform des Kaltkanals

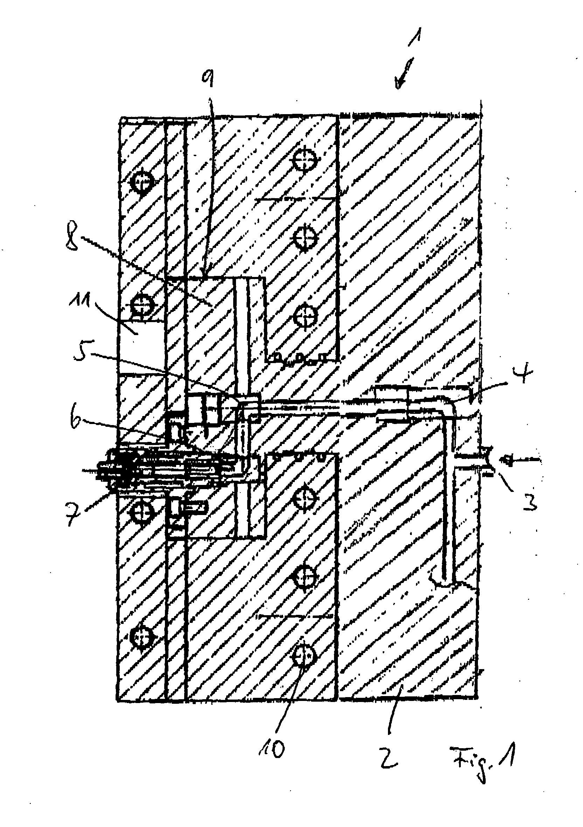

Die Figur 1 zeigt ausschnittsweise einen so genannten Kaltkanalblock zur Verarbeitung von Elastomeren und ist mit dem Bezugszeichen 1 versehen. Der Kaltkanalblock 1 besteht aus einer Platte 2, die dem nicht dargestellten Plastifizieraggregat zugewandt ist, welches mit der Anspritzdüse an die Öffnung 3 eines Kanals 4 angelegt wird. Der Kanal 4 verläuft bis zu einem Verteiler 5, der über einen weiteren Kanal 6 mit mindestens einer Kaltkahaldüse 7 verbunden ist, von denen in der Zeichnung lediglich eine dargestellt ist.

Diese Düse 7 befindet sich auf einem Einsatz 8, der drehbar in einer Ausnehmung 9 im Kaltkanalblock 1 montiert ist, wobei die Kaltkanaldüse 7 im Abstand von der Drehachse des Einsatzes 8 herum angeordnet ist.

Die Kaltkanaldüse 7 wird beim Spritzvorgang an den Angusskanal eines Spritzgießwerkzeuges (nicht dargestellt) angelegt.

Zur Temperierung des Kaltkanalblocks sind in diesem Temperierkanäle 10 vorgesehen.

Durch Verdrehen des Einsatzes 8 sind verschiedene Positionen der Kaltkanaldüse 7 möglich und somit die Betreibung verschiedener Werkzeuge unter dem gleichen Kaltkanal 1.

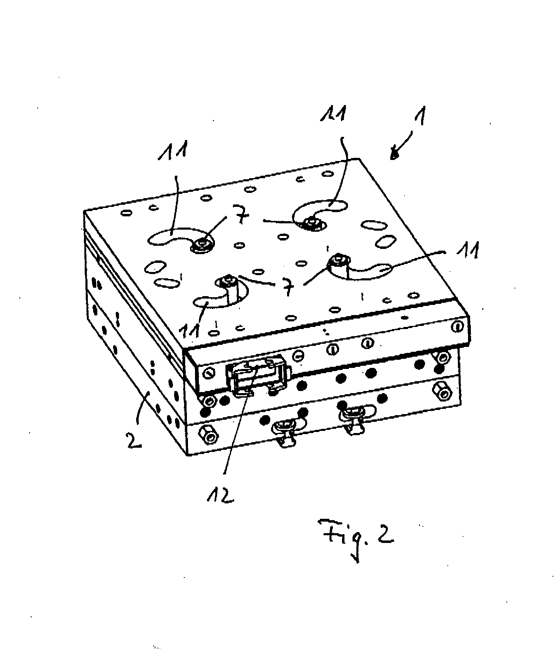

Wie aus der Figur 2 hervorgeht, ist in einer besonderen Ausführungsform der Erfindung vorgesehen, dass im Kaltkanalblock 1 vier symmetrisch zueinander angeordnete Düsen 7 vorgesehen sind, die bei diesem Ausführungsbeispiel in 180°-kreisbogenförmigen Ausnehmungen 11 verschwenkbar sind.

Die Verschwenkbewegung erfolgt mit Hilfe eines Antriebs 12, der über ein nicht dargestelltes Getriebe auf die entsprechenden Einsätze 8 wirkt, wodurch die Düsen 7 aus einer -wie hier dargestellt- Position, in der die Düsen minimalen Abstand zueinander haben in eine andere Position geschwenkt werden können, in der die Düsen 7 einen maximalen Abstand voneinander aufweisen. Zwischenstellungen sind stufenlos einstellbar.

## Patentansprüche

1. Vorrichtung zur Verarbeitung von Elastomeren und/oder Thermoplasten mit einem Verteilungssystem, das zur Verteilung des in einem Plastifizieraggregat plastifizierten Materials zwischen dem Plastifizieraggregat und einem Spritzgießwerkzeug angeordnet ist, wobei am Verteilungssystem mindestens eine Düse angeordnet ist, über die das plastifizierte Elastomer in die Kavität des Spritzgießwerkzeugs einspritzbar ist,
**dadurch gekennzeichnet,**
**dass** die mindestens eine Düse (7) außermittig auf jeweils einem drehbaren Einsatz (8) in einer Aussparung (9) im Verteilungssystem (1) angeordnet ist.

2. Vorrichtung nach Anspruch 1,
**dadurch gekennzeichnet,**
**dass** der/die drehbare (n) Einsatz/Einsätze (8) über ein Getriebe mit einem Verschwenkantrieb (12) verbunden ist/sind.

3. Vorrichtung nach Anspruch 1 oder 2,
**dadurch gekennzeichnet,**
**dass** mehr als ein drehbarer Einsatz (8) mit der ihm zugeordneten Düse (7) im Verteilungssystem (1) vorgesehen ist.

4. Vorrichtung nach Anspruch 3,
**dadurch gekennzeichnet,**
**dass** alle Düsen (7) mittels des Verschwenkantriebs (12) über das Getriebe synchron aufeinander zu bzw. voneinander weg verschwenkbar sind.

5. Vorrichtung nach einem der Ansprüche 1 bis 4,
**dadurch gekennzeichnet,**
**dass** die Düse (n) (7) auf ihrem Einsatz in einem kreisbogenförmigen bis kreisrunden Ausschnitt (11) verschwenkbar ist/sind.

6. Vorrichtung nach einem der Ansprüche 1 bis 5,
**dadurch gekennzeichnet,**
**dass** vier Düsen (7) in symmetrischer Anordnung auf dem Verteilungssystem (1) vorgesehen sind, die jeweils in einem 180° bis 360°-Bogen stufenlos verschwenkbar sind.

7. Vorrichtung nach einem der Ansprüche 1 bis 6,
**dadurch gekennzeichnet,**
**dass** das Verteilungssystem ein Thermoplastheißverteiler ist.

8. Vorrichtung nach einem der Ansprüche 1 bis 6,
**dadurch gekennzeichnet,**
**dass** das Verteilungssystem ein Kaltkanalblock ist.
